(19) **Europäisches Patentamt / European Patent Office / Office européen des brevets**

(11) **EP 2 758 343 B1**

(12) **EUROPEAN PATENT SPECIFICATION**

(45) Date of publication and mention of the grant of the patent:
**26.04.2017 Bulletin 2017/17**

(21) Application number: **11802131.0**

(22) Date of filing: **19.09.2011**

(51) Int Cl.:
*C02F 1/00* (2006.01)     *C02F 1/28* (2006.01)
*C02F 1/78* (2006.01)     *B01J 20/34* (2006.01)
*B01J 20/02* (2006.01)     *B01D 15/00* (2006.01)
*C02F 101/10* (2006.01)

(86) International application number:
**PCT/IB2011/002579**

(87) International publication number:
**WO 2013/041898 (28.03.2013 Gazette 2013/13)**

(54) **A PROCESS FOR TREATING DRINKING WATER**

VERFAHREN ZUR TRINKWASSERAUFBEREITUNG

PROCÉDÉ POUR TRAITER DE L'EAU POTABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.07.2014 Bulletin 2014/31**

(73) Proprietor: **Compagnie Gervais Danone**
**75009 Paris (FR)**

(72) Inventors:
- **DI GIOIA, Lodovico**
  **F-91300 Massy (FR)**
- **JACQUEMONT, Marlène**
  **F-42600 Montbrison (FR)**

(74) Representative: **Regimbeau**
**20, rue de Chazelles**
**75847 Paris Cedex 17 (FR)**

(56) References cited:
WO-A1-2006/116421    US-A- 5 369 072
US-A1- 2002 077 249    US-A1- 2005 247 636
US-A1- 2007 278 150    US-A1- 2009 242 483
US-A1- 2011 204 000

- **"COUNCIL DIRECTIVE 98/83/EC", The Council of the European Union Official Journal of the European Communities, vol. L330 5 December 1998 (1998-12-05), 5 December 1998 (1998-12-05), pages 32-54, XP002676187, Retrieved from the Internet: URL:http://eur-lex.europa.eu/LexUriServ/Le xUriServ.do?uri=OJ:L:1998:330:0032:0054:EN : PDF [retrieved on 2012-05-18]**

EP 2 758 343 B1

**Description**

The invention relates to a method for treating drinking water by separating, oxidizing and restituting to water a Selenium compound contained therein, in order to avoid the formation of malodorous molecules and at the same time to avoid depleting water from Selenium.

Selenium is generally present in natural waters with two predominant chemical forms, the inorganic oxyanions Selenite at the partial oxidation state of +4 and Selenate at the fully oxidation state of +6. In surface and ground waters used for production of drinking water, Selenium is rarely exceeding the regulatory limit of 10 µg/l. But even at very low level of less than 1 µg/l, microorganisms living in water such as autochthonous phototrophic and heterotrophic bacteria, are sensitive to oxidative properties of inorganic Selenium. They can resist this oxidative stress through enzymatic methylation processes that transform inorganic Selenium into organic and volatile dimethyl selenide (DMSe) and dimethyl diselenide (DMDSe) (Ranjard L., Prigent-Combaret C., Nazaret S. & Cournoyer B. Methylation of Inorganic and Organic Selenium by the Bacterial Thiopurine Methyltransferase, Journal of Bacteriology. 184, 11, 3146-3149, 2002). Other volatile molecules can be formed such as dimethyl selenyl sulfide (DMSSe) in presence of sulfur compounds. The toxicity of DMSe is approximately 1000 fold lower than inorganic Selenium, but DMSe, DMDSe and DMSSe have a very low odour threshold of few ng/l and characteristic mercaptan, swampy or hydrocarbon like malodorous smell. Presence of such volatile methylated Selenium molecules in tap or bottled water may cause serious consumer complaints. An important diversity of organisms (bacteria, algae, fungi) and in particular of microbial taxa appears to be able to methylate Selenium, with variable substrate effectiveness : Selenate > Selenite (Thompson-Eagle ET., Frankenberger WT. & Karlson U. Volatilization of Selenium by Alternaria alternata. Applied and Environmental Microbiology. 55, 6, 1406-1413, 1989) or Selenite > Selenate (Ranjard L., Prigent-Combaret C., Nazaret S., & Cournoyer B. Methylation of Inorganic and Organic Selenium by the Bacterial Thiopurine Methyltransferase. Journal of Bacteriology. 184, 11, 3146-3149, 2002). However, it is generally admitted that Selenite is readily methylated, while Selenate must be reduced into Selenite prior to its methylation and volatilization. These reduction and methylation reactions have already been proposed as a bioremediation strategy for cleaning up Se-contaminated sites, such as treatment of drainage water containing Selenium leached from irrigated agricultural soil, described for example in WO8700161.

One possible approach to avoid formation of malodorous methylated Selenium compounds in drinking water is to remove Selenium from water before distributing it in the water network or bottling. Twidwell et al. (Technologies and Potential Technologies for Removing Selenium from Process and Mine Wastewaters, Proceedings Minor Elements 2000, SME, Salt Lake City, UT., Feb., pp 53-66, 2000) carried out an extensive review of literature to identify appropriate technologies for the removal of Selenium from a variety of wastewaters. For drinking water, operative constraints are of primary importance, including water losses, effluents disposal, hygiene maintaining and easy of use. Moreover, for natural mineral water, treatments used to remove specific constituents shall not alter their composition as regards the essential constituents which give them their properties, within the natural fluctuation margin, and not induce the formation of treatment residues. These constraints obviously exclude the possibility to use reverse osmosis, nanofiltration and ion exchange with anionic resins. Precipitation with ferrous or ferric ions is not very effective if the Selenium species are not reduced, and iron sludges charged with Selenium are the final wasteform product that are difficult to dispose. The technology of adsorption on metal oxyhydroxides is well adapted to remove Selenium from ground waters (Blondeau S., Perot J., Nauleau F. Journées Information Eaux, 2008 Poitiers, 23-25 septembre 2008, Conference n°15). A surface-modified zeolite was proposed by Rayalu et al. (US20070210006) in order to remove levels of arsenic in the range of mg/l and possibly other anions like chromium and Selenium. The zeolite can either be regenerated by a caustic soda solution, which produces an effluent difficult to dispose, or converted into ceramic precursors by a high temperature and energy consuming treatment (700-800°C). It is well established that iron and aluminium oxide minerals and coatings are the most common geosorbents for Selenium oxyanions in soils (Peak D. Adsorption mechanisms of selenium oxyanions at the aluminium oxide/water interface. Journal of Colloid And Interface Science. 303, 337-345, 2006), with special emphasis on ferric oxyhydroxides that can strongly adsorb Selenite. Some examples are the granules based on iron oxide and/or iron oxyhydroxide described in EP1582505 and characterized in that the granules have $\alpha$-, $\beta$-, $\gamma$- and/or $\delta$-FeOOH phases and/or ferrihydrite phases and also mixed and intermediate phases of the same. Regeneration of these granules is not disclosed by the authors. In EP 2 141 126 a porous iron oxide for adsorption of hazardous substances such as Selenium is described and regeneration is carried out by sodium hydroxide. In WO2006116421, a composition and method for removing arsenic and Selenium from water is proposed, in which the composition comprises ferric hydroxide and ferric oxyhydroxide coated substrates. The removal is facilitated by contacting the contaminant with an oxidizer such as ozone, to alter the oxidation state of the contaminant and improve the concomitant or subsequent removal by contact with the composition. The composition is discarded when exhausted. In EP1 476 401, a method for treating water containing heavy metals, arsenic and hydrogen sulphide is disclosed, in which water is filtered through a filter material containing at least 50% by weight of manganese dioxide and the filter is regenerated periodically by an oxidant such as ozone, in a circulation loop. However, Selenium being a non-metal element, neither removal of Selenium, nor specific oxidation of Selenium compounds is disclosed..

Selenium is today recognized as an element that is essential to good metabolic function (Barron E., Migeot V., Rabouan S., Potin-Gautier M., Séby F., Hartemann P., Lévi Y.and Legube B. The case for re-evaluating the upper limit value for selenium in drinking water in Europe. Journal of Water and Health. 07.4, 630-641, 2009). Its deficiency leads to health problems in humans and animals alike. In humans, the best known pathological condition is Keshan disease, observed notably in an area of China where the Selenium level in the soil is very low. Since 1978, systematic supplementation of the population's diet with sodium Selenate has resulted in almost complete eradication of this congestive cardiomyopathy. It is thus beneficial to health to preserve the Selenium content of drinking water when the level does not exceed the safety limit of 10 $\mu$g/l. It is also beneficial to operating costs and environmental impact not to have to dispose regeneration effluents heavily charged with Selenium.

Therefore, it is a goal of the present invention to find a novel process for avoiding the formation of malodorous volatile methylated Selenium molecules in drinking water, without substantially removing Selenium compounds and without generating Selenium wastes.

One of the aspects of the invention is to propose a new process for preparing bottled water, and in particular a natural mineral water, that keeps the neutral taste and smell until end of shelf-life, even if Selenium is present.

It has been discovered by the inventors that drinking water containing only Selenate not Selenite, at a level complying with the regulatory limit of less than 10 $\mu$g/l is not altered by malodorous Selenium compounds. This is also the case for bottled drinking water, in particular natural mineral water, until end of shelf-life. It has also been discovered that it is possible to convert all Selenite contained in water into Selenate by an adsorption-oxidation-desorption process, without significantly altering the Selenium content of water. It is possible in this way to preserve the Selenium content of water and to avoid generation of malodorous volatile methylated Selenium molecules. It is also possible to avoid generation of effluents charged with Selenium and difficult to dispose.

Therefore, the present invention relates to a process for treating a raw water containing Selenium in a lower than 10 $\mu$g/l content, the Selenium being partly in the form of Selenite, comprising the following successive steps:

a. a first production step in which the raw water is filtered through a filter material containing iron oxide hydroxide and/or titanium oxide in order to selectively remove almost all the Selenite from said raw water;
b. a regeneration step in which ozonated water is passed through the filter in order to oxidize into Selenate the Selenite retained by said filter material during the first production step;
c. optionally a rinsing step in order to flush ozonation by-products out of the filter;
d. a second production step in which the raw water is filtered through the regenerated filter material obtained in step b) or c) in order to selectively remove almost all the Selenite from said raw water and to release Selenate from the filter material in said water, wherein said release is continuous during the whole second production step and wherein the Selenium content in the treated water obtained does not exceed 10 $\mu$g/l..

Advantageously, the Selenium content obtained in the treated water does not exceed 150% of the Selenium content in raw water, more preferably does not exceed 130% and even more preferably does not exceed 110%.

The term "Selenium" as used herein, designates all the Selenium compounds dissolved in water, including the oxyanions Selenite and Selenate. The Selenium content is expressed in $\mu$g Se/l.

Advantageously, the raw water to be treated by the process according to the present invention contains a detectable Selenium content.

The term "detectable Selenium content" as used herein, designates the Selenium content which can be detected using the following analytical method: ICP/MS (Inductively Coupled Plasma / Mass Spectrometry) according to the norm NF EN ISO 17294-2 (April 2005): Water quality. Application of inductively coupled plasma mass spectrometry (ICP-MS). Determination of 62 elements. Therefore the Selenium content is above 0.05 $\mu$g Se / l when using this analytical method.

Advantageously the raw water contains between 0.1 $\mu$g Se / l and 2 $\mu$g Se / l.

The term "the Selenium being partly in the form of Selenite" as used herein, designates that at least part of, the Selenium compounds dissolved in water is in the form of the oxyanions Selenite. Advantageously at least 1% of the Selenium compounds dissolved in water is in the form of the oxyanions Selenite.

In a particular embodiment all the Selenium compounds dissolved in water are in the form of the oxyanion Selenite.

In order to determine the form of the Selenium contained in water (Selenite and/or Selenate) and therefore if the raw water contains Selenite, the analytical method used is the Solid-phase extraction for the simultaneous preconcentration of organic (selenocystine) and inorganic [Se(IV), Se(VI)] selenium in natural waters published in Bueno M & Potin-gautier M., Journal of Chromatography A, vol. 963, no. 1-2, pp. 185-193, 2002.

The term "iron oxide hydroxide" as used herein, designates the different forms of iron oxyhydroxides with chemical formula FeOOH, such as goethite ($\alpha$-FeOOH), akaganeite ($\beta$-FeOOH), lepidocrocite ($\gamma$-FeOOH), and feroxyhyte ($\delta$-FeOOH), either from natural or synthetic origin or mixes thereof.

Many transition metal oxides and hydroxides are known to be capable of forming complexes with Selenium compounds. It has now been found that among all the available metal oxides of chemical formula $Me_xO_y$ or of hydrous metal oxides of chemical formula MeOOH, or of metal hydroxydes having a chemical formula $Me(OH)_z$, only iron oxides hydroxides and titanium oxides have the particular properties necessary to achieve the process according to the invention.

In one specific embodiment of the invention, the filter material is titanium oxide, in particular titanium dioxide..

In another specific embodiment of the invention, the filter material is iron oxide hydroxide. This filter material is less brittle than titanium oxide

The expression "iron oxide hydroxide filter material" as used herein, designates granules or pellets of pure iron oxide hydroxide such as FeOOH or of coated substrates. Advantageously the coated substrates contains at least 10% of pure iron oxide hydroxide.

In a particular embodiment, the filter material is composed of granules of FeOOH, such as commercially available Bayoxide E33®, a well-known adsorption media for arsenic removal from drinking water.

One of the advantages of using FeOOH as a filter material is the stability of this mineral form, compared to amorphous $Fe(OH)_3$ which has the tendency to evolve to ferrihydrite also of chemical formula $Fe(OH)_3$ then goethite $\alpha$-FeOOH.

One of the advantages of the process according to the present invention is that advantageously, the filter material doesn't need to be replaced because Selenium does not accumulate in the filter material since the filter is regenerated by the regeneration step b).

The term "raw water" as used herein, designates surface or groundwater to be used for the production of tap water, spring water, mineral water, table water or natural mineral water and can be advantageously pre-treated in order to remove physical or chemical contaminants such as suspended particles, turbidity or dissolved organic carbon.

The treated water obtained by the use of the process according to the present invention is therefore advantageously tap water, spring water, mineral water, table water or natural mineral water which contains only Selenate as the Selenium compound with a Selenium content lower than 10 μg/l.

The term "natural mineral water" as used herein, designates water that is extracted from protected hydrogeological underground systems and is free from contaminants of human origin. This water complies with the Codex Standard 108-1981 and in Europe with the Directive 2009/54/EC of the European Parliament and of the Council.

The term "drinking water" as used herein, designates water in conformity with local drinking water standards such as those defined for Europe in the Council Directive 98/83 EC.

One advantage of the present invention is the stability of content of essential constituents of water, which are kept in the range of fluctuation of $\pm$ 10% between the raw water and the treated water, similar to the natural fluctuation observed and tolerated for natural mineral waters.

The term "essential constituents" used therein designates the content of Calcium ($Ca^{2+}$), Magnesium ($Mg^{2+}$), Sodium ($Na^+$), Potassium ($K^+$), Bicarbonate ($HCO_3^-$), Chloride ($Cl^-$), Sulfate ($SO_4^{2-}$) Nitrate ($NO_3^-$), Silica ($SiO_2$ or $Si(OH)_4$) and Fluoride ($F^-$) dissolved ions.

Advantageously it designates the content of Calcium ($Ca^{2+}$), Magnesium ($Mg^{2+}$), Sodium ($Na^+$), Potassium ($K^+$), Bicarbonate ($HCO_3^-$), Chloride ($Cl^-$), Sulfate ($SO_4^{2-}$) and Nitrate ($NO_3^-$) dissolved ions

Therefore, advantageously the treated water content in essential constituents Calcium ($Ca^{2+}$), Magnesium ($Mg^{2+}$), Sodium ($Na^+$), Potassium ($K^+$), Bicarbonate ($HCO_3^-$), Chloride ($Cl^-$), Sulfate ($SO_4^{2-}$) and Nitrate ($NO_3^-$) is equal to the raw water content $\pm$ 10%.

The term "almost all the Selenite" as used herein, means that the amount of Selenite contained in treated water is such that during its shelf life, the water will not contain volatile methylated Selenium molecules, such as DMSe, DMSSe and DMDSe, in particular at a level likely to alter the neutral organoleptic characteristics of the water and to cause consumer complaints due to mercaptan, swampy or hydrocarbon like malodorous smell, advantageously, it does not contain volatile methylated Selenium molecules above the odour threshold level of 5 ng/l until end of shelf-life. The amount of volatile methylated Selenium molecules is measured by using the analytical method described in table 2 page 14 of Hymer et al, J. Chromatogr. A 1114 (2006) 1-20. In particular this analytical method is GC (cryogenic trapping). However, the presence of volatile methylated Selenium molecules can also be detected by human nose which has even a better sensitivity than any known analytical method.

More advantageously the treated water does not contain any detectable level of Selenite by using the analytical method Solid-phase extraction for the simultaneous preconcentration of organic (selenocystine) and inorganic [Se(IV), Se(VI)] selenium in natural waters published in Bueno M. & Potin-Gautier M., Journal of Chromatography A, vol. 963, no. 1-2, pp. 185-193, 2002.

Advantageously, the amount of Selenite in the treated water is less than 0.01 μg/l which corresponds to the lower detectable limit by the analytical method indicated above.

Therefore in the process according to the present invention, the production steps (a) and/or (d) consists in filtering raw water through a filter material.

In a particular embodiment, raw water containing Selenite is passed through the filter material in a downstream flow path.

In an advantageous embodiment, the filter material is packed into a column and the raw water is filtered through the column.

Advantageously the raw water is filtered at a flow speed of 1 to 20 m/h, more preferably 3 to 15 m/h, even more preferably 5 to 10 m/h, and with a contact time of water with the filter in the range of 1 to 30 minutes, more preferably 2 to 20 minutes, in order to efficiently adsorb Selenite.

To carry out the process according to the invention, the filter material (1) is preferably packed into a column equipped with infeed (2) and outfeed (3) pipes, the whole constituting a closed filter (4), under pressure or not, in order to achieve a good hygiene by avoiding contact between water and outside air. The filter is filled with the filter material in the form of granules or pellets or of any sort of coated substrates. The filter can additionally contain a support layer made of inert gravel at the bottom, and a perforated floor equipped or not with water collectors such as nozzles or candles disposed vertically or horizontally. All the materials constituting the filter, including the column, pipes, gaskets and valves are ozone resistant.

During the production step a) and/or d), the raw water is advantageously filtered in an upstream or downstream mode, preferably downstream in order to have a flow of water from top of the filter to its bottom.

A particular advantage of the process according to the invention is its effectiveness whatever the temperature of raw water.

Advantageously, the production step is carried out at a temperature between 5°C and 35°C, more preferably of between 5°C and 25°C, even more preferably of between 5°C and 15°C.

The process of the invention can be carried out at the pH range of natural waters, generally in the range of 6.5 to 8.5.

However, lower pH can be found in waters containing naturally carbon dioxide or artificially carbonated. For these waters the pH can be as low as 3.5.

At the opposite, some very alkaline waters can have a pH up to 9.0. It is therefore the object of the invention to carry out the production step a) and/or d) at a pH between 3.5 and 9.0, more preferably between 5.0 and 8.5, even more preferably between 6.5 and 8.0.

Advantageously during the production step a) and/or d), the pH of raw water can be adjusted before filtration by injection into the flow of raw water of carbon dioxide (12), which will form carbonic acid in water. The level of carbon dioxide to be injected is very limited, in order not to alter the organoleptic characteristics of the carbonated water. More advantageously, carbon dioxide is injected into the flow of raw water during the production steps a) and/or d) and before the filtration of raw water in order to achieve a concentration in raw water higher than the concentration before injection and lower than 150 mg/l, more preferably below 100 mg/l, at the inlet of the filter.

In a particular embodiment of the process according to the present invention steps b) to d) are repeated at least once, and advantageously as often as necessary in order to treat the whole raw water. Therefore, the process consists in cycles of production step/regeneration step, step b) being carried out at the frequency necessary in order to achieve a Selenium content in the treated water which does not exceed 10 $\mu$g/l and advantageously does not exceed 150% of the Selenium content in raw water, more preferably does not exceed 130%, even more preferably does not exceed 110%.

Therefore the process according to the present invention can contain an initiation step (which can be for example step a)) in which a production step is carried out in order to load a new filter material with Selenite and in which the treated water contains a lower amount of Selenium than the raw water, since all the Selenite is retained in the filter material and no Selenate is released by the filter material, apart from the selenate already present in raw water.

The treated water obtained from said initiation step contains less Selenium than the raw water. If the Selenium contained in the raw water is only in the form of Selenite, the treated water obtained from said initiation step does not contain any more Selenium. The treated water obtained from said initiation step can be stored in a tank or can be put in bottle for consumption or in the tap water system, if water free of Selenium is needed.

When the maximum amount of Selenite adsorbed by the filter material is reached, step a) or d) is stopped and step b) is carried out, i.e., the filter material is regenerated with ozone by the use of ozonated water. This maximum amount doesn't correspond to the maximum adsorption capacity of the filter material, but is related to the content of Selenite in raw water and to the flow rate of raw water through the filter, i.e. the flux of Selenite.

The higher is the amount of adsorbed Selenite in the production step, such as step a) or d), the higher and longer is the peak release of Selenate in treated water in the subsequent production step d).

It has unexpectedly been discovered by the inventors that Selenite adsorbed by the filter material is oxidized by ozone into Selenate, but Selenate is not readily released by the filter material during the regeneration step b) even if the filter material has no adsorption capacity for Selenate. As a consequence, only a very small proportion of the adsorbed Selenium is released during the regeneration step b), typically 5 to 15% of the amount of the Selenite adsorbed on the filter material during production step a) or d).

Other oxidants exists which could oxidize Selenite in Selenate such as hydrogen peroxide $H_2O_2$, Hypochlorite $ClO^-$, Chlorine $Cl_2$, Chlorine dioxide ($ClO_2$). However they have more drawbacks than ozone, such as the difficulty to rinse off chlorine compounds and the instability of hydrogen peroxide which necessitates the use of stabilising agents which are difficult to flush out of the filter material.

Advantageously, the regeneration step b) is carried out at an increased frequency in order to reduce the peak release of Selenate in treated water and not to change significantly its Selenium content.

Therefore the frequency of the regeneration step is adapted to the selenium content which should be obtained.

More advantageously, the regeneration step b) is carried out at a frequency of between one per month and one per day in order to achieve almost constant release of Selenate into treated water in the subsequent production step d), more preferably between one per week and one per day.

The present method derives from an empirical discovery and was not predicted by the existing adsorption-desorption theories. It will be understood by those skilled in the art, that some very quick preliminary tests consisting in carrying out successive cycles of adsorption (steps a and d)-regeneration (step b) at different regeneration frequencies, can be used to successfully determine the optimal frequency for carrying out the regeneration step b). However it has been observed by the inventors that the following empirical formula can give a good rough estimate of the maximum concentration of the Selenate released in step d):

$$\text{Max [Selenate] out (}\mu\text{g/l)} = \text{Fixed Selenite (}\mu\text{g) / 100}$$

The maximum concentration of Selenate at the outlet of the filter after the regeneration step b) and therefore during the subsequent production step d) ([Selenate] (in $\mu$g/l)) is equal to the fixed amount of Selenite (in $\mu$g) during the adsorption cycle of the production steps a) or d) divided per 100. This formula can give a first estimate of the optimum frequency for carrying out the regeneration step b), considering that only Selenite is fixed by the filter. The adsorption / regeneration cycle (steps a/b and d/b) duration can be chosen in order to avoid too much Selenite retention by the filter material and advantageously a maximum release of Selenate after the regeneration step b) and during the subsequent production step d) in order to obtain a Selenium content in the treated water obtained after step d) not exceeding 150% of the raw water content.

One of the interesting aspects of the process according to the invention is the possibility to sanitize the filter concomitantly to the regeneration, in order to control the bacterial development, as ozone is a well-known and even one of the most powerful water disinfectants.

Therefore advantageously, the regeneration step b) is carried out concomitantly with a sanitation step in which the filter material is sterilized by the ozonated water passing through the filter.

In this case, step b) consists in the concomitant regeneration and sanitation step.

Advantageously, typical ozone concentrations in ozonated water effective for disinfection of the filter material are in the range of 0.05 to 0.5 mg/l, advantageously in the range of 0.10 mg/l to 0.25 mg/l. This concentration is measured at the outlet of the filter material during the sanitation step.

More effectively, the parameter which has to be taken into consideration for the filter material disinfection is the CT value, equivalent to the ozone concentration "C" in the ozonated water multiplied by the contact time "T" of ozonated water with the filter material.

Advantageously CT values measured at the outlet of the filter during the sanitation step in the range of 1 to 50 mg.l$^{-1}$.min, more preferably in the range of 1 to 10 mg.l$^{-1}$.min, are known to be very effective to kill most of the pathogenic microorganisms, and even the most ozone resistant protozoan.

This sanitation is obtained advantageously by injecting ozonated water at the inlet of the filter with an ozone concentration sufficiently high, advantageously of at least 1mg/l, more advantageously of at least 2mg/l, to allow part of the ozone to reach the outlet of the filter even if ozone is decomposed into oxygen by the filter material due to its catalytic decomposition effect.

If the sanitation step is carried out during a sufficient period of time, the adequate CT value is reached and the filter is correctly disinfected.

Surprisingly, it has been discovered by the inventors, that it is advantageous to activate the filter material before its use in the process according to the present invention. This activation step consists in contacting the filter with ozonated water in order to allow a release of ozone at a constant and sufficient amount at the outlet of the filter.

In a preferred embodiment, the filter material is activated by one to fifteen cycles, each cycle consisting in contacting the filter with ozonated water, more preferably 5 to 10 cycles, in particular when the ozone content of ozonated water is 2 mg/l. It is also possible to activate the filter material using a single activation cycle, if the activation time is long enough, for example if the activation cycle lasts between one to 15 hours, advantageously between 5 to 10 hours.

In one mode of functioning, a concentration of ozone in ozonated water effective for disinfection is measured at the outlet of the filter material during the regeneration step, preferably a concentration in the range 0.05 mg/l to 0.50 mg/l, more preferably in the range 0.10 mg/l to 0.25 mg/l.

While not wishing to be bound by any theory, it is believed by the inventors that oxidation of the adsorbed Selenite into Selenate is very fast, contrary to the relatively slow diffusion of the Selenate from the inside to the surface of the filter material. Consequently, it is not desirable to carry out long regeneration steps b), which are time consuming and increase operational costs due to ozone production.

Preferably, the regeneration step b) lasts no more than 2 hours, more preferably no more than 1 hour.

The most effective regeneration is obtained when the ozonated water is circulated in a co-current mode. This allows the highest concentration of ozone to reach the first layers of filter material where most of Selenite is adsorbed.

Therefore advantageously the regeneration step b) is carried out in a co-current mode.

Advantageously the ozone concentration in the ozonated water at the inlet of the filter, ozonated water flow and sanitation duration are adjusted in order to achieve a CT value, measured at the outlet of the filter, comprised in the range of 1 to 50 mg.l$^{-1}$.min, more preferably in the range 1 to 10 mg.l$^{-1}$.min.

In a preferred mode of functioning, the regeneration step b) is carried out in loop, in order to limit the volume of water required for the regeneration. The regeneration loop can comprise a tank (5), a recirculation pump (6), an ozone production device (7) and an ozone injection and mixing device (8). Optional devices in the regeneration loop could comprise, without limitation, an ozone measuring device (9) at the inlet of the filter and another at the outlet of the filter and an ozone destruction unit (10) located at the top of the regeneration tank.

Water to be used for the regeneration step b) and which will be ozonated can be either raw water or treated water, or any other available water as long as it complies with drinking water regulations. However the preferred water to be used for the regeneration step b) should have the same composition as raw and treated water relatively to essential constituents.

One well known drawback of water ozonation is the generation of disinfection by-products such a bromate, if the water to be treated contains bromide. The bromide content of water is measured using the analytical method HPLC-ICP-MS described in Liu et al, Geostandard and Geoanalytical Research, vol.35, N°1, pages 69-74 :. The bromide content of water can only be detected if water contains more than 0.05 $\mu$g/l of bromide.

These potentially formed ozonation by-products must be removed from the filter before the filter is putted back into service for the following production step. One possible method for removing the ozonation by-products is to discard the first bed volumes of treated water at the beginning of the subsequent production step d).

Another possible method is to drain the regeneration tank via a drain valve (11), to fill it with fresh water and recirculate this fresh water into the filter. These rinsing operations can be repeated and continued until the non-detectable level of bromate (By ion chromatography (Norm NF EN ISO 15061 [September 2001]) with a concentration limit of 0.5 $\mu$g/l) is achieved in the loop water or at the outlet of the filter. Therefore advantageously the process according to the present invention comprises a rinsing step c) after step b) and before step d) in order to flush ozonation by-products out of the filter.

One of the advantages of the invention is the capacity to preserve the integrity of the filter material during the successive production and regeneration steps. The possible disinfection with ozonated water will avoid hot water or steam treatments that may cause partial pulverisation of the media and its migration into the treated water.

Many configurations can be used to treat raw water using the process according to the present invention.

In one configuration, a single filter is operated cyclically at the industrial plant, each cycle comprising a production step and a regeneration step, optionally concomitant with a sanitation step, and optionally a rinsing step. The treated water can be stored in a treated water tank, in order not to interrupt the treated water distribution or bottling when the production step is finished. In a second configuration, two filters are operated in parallel, with the second filter being in the production cycle when the first filter is not. In this case, the cycle shift between the two filters can further reduce the variations of Selenium content in treated water. Without limitation, many other configurations can be used as can be clearly understood by those skilled in the art.

The present invention also concerns a drinking water, advantageously a still drinking water, obtainable by the process according to the present invention characterized in that it contains Selenium in a lower than 10 $\mu$g/l content and it does not contain volatile methylated Selenium molecules, such as DMSe, DMSSe and DMDSe, in particular at a level likely to alter the neutral organoleptic characteristics of the water and to cause consumer complaints due to mercaptan, swampy or hydrocarbon like malodorous smell. The drinking water treated according to the process of the invention, when bottled, does not contain volatile methylated Selenium molecules above the odour threshold level of 5 ng/l until end of shelf-life.

Advantageously, the content of essential constituents Calcium ($Ca^{2+}$), Magnesium ($Mg^{2+}$), Sodium ($Na^+$), Potassium ($K^+$), Bicarbonate ($HCO_3^-$), Chloride ($Cl^-$), Sulfate ($SO_4^{2-}$), Nitrate ($NO_3^-$), Silica ($SiO_2$ or $Si(OH)_4$) and Fluoride ($F^-$) dissolved ions is kept in the range of fluctuation of $\pm$ 10% which is an essential criteria for natural mineral waters. More advantageously the content of essential constituents Calcium ($Ca^{2+}$), Magnesium ($Mg^{2+}$), Sodium ($Na^+$), Potassium ($K^+$), Bicarbonate ($HCO_3^-$), Chloride ($Cl^-$), Sulfate ($SO_4^{2-}$) and Nitrate ($NO_3^-$) dissolved ions is kept in the range of fluctuation of $\pm$ 10% which is an essential criteria for natural mineral waters.

The process of the present invention is particularly advantageous since it can be used on carbonated water as the raw water since it can be carried out under pressure. In this case the treated water obtained is a treated carbonated water.

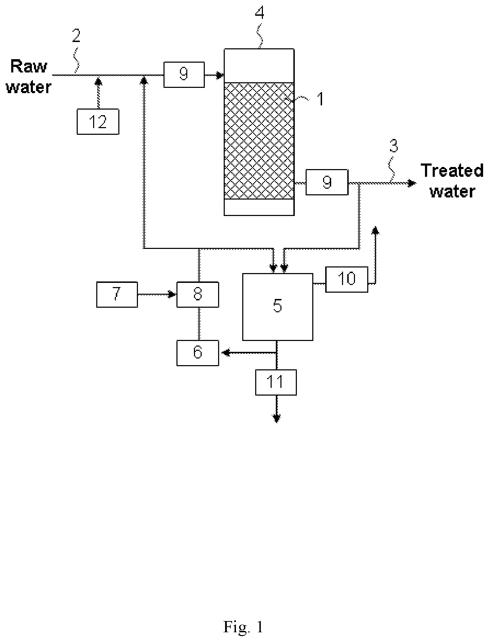

Advantageously the process is carried out using the installation of Figure 1 as described herein:

The filter material (1) is packed into a column equipped with infeed (2) and outfeed (3) pipes respectively for raw water and for treated water, the whole constituting a closed filter (4).

The regeneration loop comprises a tank (5), a recirculation pump (6), an ozone production device (7) and an ozone injection and mixing device (8). The regeneration loop comprises also an ozone measuring device (9) at the inlet of the filter and another at the outlet of the filter and an ozone destruction unit (10) located at the top of the regeneration tank.

The regeneration tank can be drained via a drain valve (11), to fill it with fresh water and recirculate this fresh water into the filter.

The pH of raw water can be adjusted before filtration by injection into the flow of raw water of carbon dioxide (12), which will form carbonic acid in water.

The characteristics of the present invention will be further explained in the examples and figures as explained below.

FIGURES

Figure 1: Figure 1 represents an example of a schematic diagram of an installation intended to carry out the process according to the present invention.

Figure 2: Figure 2 represents the load profile of adsorbed Selenium in the filter material packed in a column (in $\mu g/g$ of filter material) as a function of filter column depth (in cm).

Figure 3: Figure 3 represents the Selenium content (in $\mu g/l$) in the loop water used for regeneration, measured after 1h, 2h and 6h, during 4 consecutive regenerations.

Figure 4: Figure 4 represents the evolution of Selenium content (in $\mu g/l$) in treated water during 3 cycles of 7 days production followed by a weekly regeneration of 2 hours. The raw water contains 1.5 to 2.0 $\mu g/l$ of Selenium and a variable proportion of Selenite in the range 11 to 97%, the remaining Selenium being Selenate.

Figure 5: Figure 5 represents the evolution of Selenium content (in $\mu g/l$) in treated water during 8 cycles of 1 day production followed by a daily regeneration of 1 hour. The raw water contains 1.5 to 2.0 $\mu g/l$ of Selenium and a variable proportion of Selenite in the range 11 to 97%, the remaining Selenium being Selenate.

Figure 6: Figure 6 represents the ozone concentration at the inlet and the outlet of the second filter used in Example 5, and measured at the end of each daily regeneration cycle.

EXAMPLES

Example 1

Adsorption tests of Selenite and Selenate have been carried out with different filter materials, listed in Table 1.1 litre of filter material is packed into a column of 53 mm of diameter and fed with a raw water RW1, having the composition reported in Table 2. The flow is maintained at 10 l/h, resulting in a flow speed of 4.5 m/h and a contact time of 6 minutes.

Table 1 : Characteristics of the filter materials

| Chemical composition | Formula | weight % | Commercial name | Code |
|---|---|---|---|---|
| Activated alumina Ferric iron coating | $Al_2O_3$ <br> $Fe_2O_3$ <br> $Fe(OH)_3$ | 80-96% <br> 3-7% <br> 3-7% | ActiGuard AAFS50 | AA |
| Titanium dioxide Metal oxide (trade secret) | $TiO_2$ | 81-99,99% <br> 0.01-1% | Adsorbsia GTO | TI |
| Iron oxyhydroxide | FeOOH | > 70% | Bayoxide E33 | E33 |

8

Table 2 : Composition of raw water RW1 (in mg/l)

| $Ca^{2+}$ | $Mg^{2+}$ | $Na^+$ | $K^+$ | $HCO_3^-$ | $Cl^-$ | $SO_4^{2-}$ | $NO_3^-$ |
|---|---|---|---|---|---|---|---|
| 7.6 | 2.3 | 28.5 | 6.2 | 73.6 | 11.0 | 7.0 | 6.5 |

RW1 is spiked successively with sodium Selenite or sodium Selenate. The concentration of Selenite and Selenate is measured in treated water after about 500 bed volumes filtered. The concentrations of Selenite and Selenate in RW1 and treated water are reported in Table 3

Table 3 : Measured concentrations of Selenite and Selenate

| | RW1 spiked with $9.8 \pm 0.1$ μg/l of Selenite | | |
|---|---|---|---|
| Filtered volume : 520 1 | Selenium | Selenite | Selenate |
| AA | $\leq$ LOQ | $\leq$ LOQ | $\leq$ LOQ |
| TI | $\leq$ LOQ | $\leq$ LOQ | $\leq$ LOQ |
| E33 | $\leq$ LOQ | $\leq$ LOQ | $\leq$ LOQ |
| | RW1 spiked with $8.9 \pm 0.1$ μg/l of Selenate | | |
| Filtered volume : 540 1 | Selenium | Selenite | Selenate |
| AA | $1.9 \pm 0.1$ | $\leq$ LOQ | $1.7 \pm 0.1$ |
| TI | $9.1 \pm 0.1$ | $\leq$ LOQ | $9.0 \pm 0.1$ |
| E33 | 8.9 | < LOQ | 9.0 |
| LOQ = limit of quantification = 0.30 μg/l | | | |

The results clearly indicate that AA, TI and E33 can remove all the Selenite, but not Selenate, except AA, which removed about 80% of Selenate. The composition of essential constituents is not altered during the filtration.

Example 2

Adsorption tests of Selenite are carried out with the two filter materials listed in Table 4.

Table 4 : Characteristics of the filter materials

| Chemical composition | Formula | | weight % | Commercial name | Code |
|---|---|---|---|---|---|
| Ferric Hydroxide | $Fe(OH)_3$ + β-FeOOH | 60% | 50- | GEH | GEH |
| Iron oxyhydroxide | FeOOH | 70% | > | Bayoxide E33 | E33 |

1 liter of filter material is packed into a column of 73.1 mm of internal diameter and fed with a raw water RW2 having the composition reported in Table 5. The flow was maintained at 10 l/h and the flow speed was 2.4 m/h, resulting in a contact time of 6 minutes.

Table 5 : Composition of raw water RW2 (in mg/l)

| $Ca^{2+}$ | $Mg^{2+}$ | $Na^+$ | $K^+$ | $HCO_3^-$ | $Cl^-$ | $SO_4^{2-}$ | $NO_3^-$ |
|---|---|---|---|---|---|---|---|
| 8.0 | 1.6 | 26.1 | 6.1 | 73.6 | 11.8 | 6.6 | 6.0 |

RW2 is spiked with sodium Selenite. The concentration of Selenite is measured in raw and treated water after 1330, 2600 and 3560 bed volumes (volume of treated water by volume of filter) (BV) and is reported in Table 6.

Table 6 : Concentration of Selenite in raw and treated water for columns filled with E33 or GEH

| BV | E33 | | GEH | |
|---|---|---|---|---|
| | in | out | in | out |
| 0 | 1.9 ± 0.1 | <0.3 | 1.9 ± 0.1 | <0.3 |
| 1330 | | <0.3 | | <0.3 |
| 2600 | 1.9 ± 0.1 | <0.3 | 1.9 ± 0.1 | <0.3 |
| 3560 | 1.9 ± 0.1 | <0.3 | 1.9 ± 0.1 | <0.3 |

The results clearly indicate that E33 and GEH can remove all the Selenite. The composition of essential constituents is measured for E33 and GEH after 1800 BV for treated water and reported in Table 7, in % of the value in raw water RW2.

Table 7 : Composition of treated water in % of the concentration in raw water

| Filter Material | $Ca^{2+}$ | $Mg^{2+}$ | $Na^+$ | $K^+$ | $HCO_3^-$ | $Cl^-$ | $SO_4^{2-}$ | $NO_3^-$ |
|---|---|---|---|---|---|---|---|---|
| E33 | 99% | 100% | 99% | 97% | 99% | 100% | 108% | 100% |
| GEH | 100% | 100% | 98% | 95% | 99% | 100% | 100% | 108% |

The composition of essential constituents is not altered during the filtration.

After 3560 BV the production cycle is stopped and the GEH filter material is regenerated and sanitized by injecting 4.0 to 4.5 mg/l of ozonated RW2 water. The regeneration is carried out during 1h in co-current mode and the ozone content at the outlet of the filter is 0.1 mg/l. The total amount of Selenium removed from the filter material during 1h regeneration is 48 μg, compared to 6.6 mg adsorbed during the production cycle. This corresponds to only 0.7% of the adsorbed amount.

Example 3

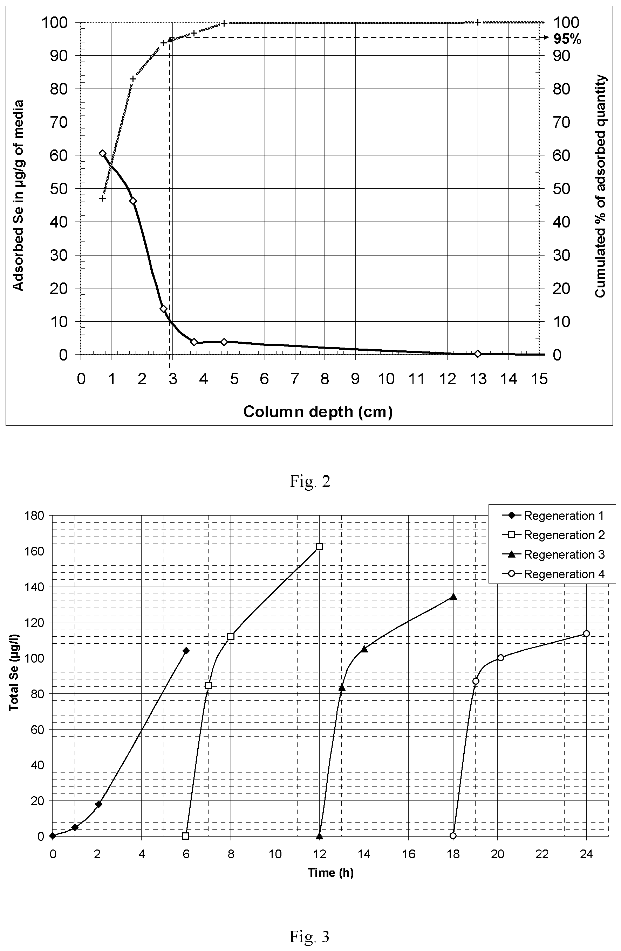

Column of example 1 filled with E33 and previously loaded with Selenite as described in example 1 is sampled at different filter depth. At each depth, 1 ml of media is sampled in the middle of the disk representing the filter section, then soaked into 300 ml of sodium hydroxide 1N during 3 hours in order to extract the Selenite. After analysis, the quantity of Selenite adsorbed per quantity of media is calculated at each depth and also calculated in cumulated % of total adsorbed Selenite. The load profile is plotted in Figure 2 as a function of filter depth.

The Selenite is adsorbed mostly in the top layer of the filter, with 95% adsorbed in the first 3 cm. This proves the high affinity of Selenite for E33 and implies the better efficiency of a co-current regeneration in order to get the highest ozone content in the top of the filter, where the Selenite content to be oxidized is the highest.

Example 4

Column of example 2 is filled with E33 filter material and loaded with 2528 BV of water containing 8.1 μg/l of Selenite. The total amount of loaded Selenite at the end of the production cycle is 20.47 mg. The regeneration and sanitation cycle is carried out at 21 L/h during 6 hours in a co-current mode and in loop, with a concentration of ozone in the inlet water of 2.8 to 3.2 ppm. Samples of loop water used for the regeneration are taken to measure Selenium content after 1h, 2h and 6h. 4 regenerations are repeated during 4 consecutive days.

Figure 3 clearly highlights that the first regeneration cycle is different from the others and corresponds to an activation phase of the filter material, with less Selenium released even if the filter material contains more Selenium. For the following regeneration cycles, after 1 h, the increase of Selenium content in the loop water is less quick, proving that after 1h the regeneration is less efficient. Only 85 % of the adsorbed Selenium is extracted after 4 x 6 h = 24 regeneration period. This very long regeneration duration is not compatible with industrial production cycles. Such type of long-lasting regeneration is not in the scope of the invention.

Example 5

A water RW3 is used, having the composition reported in Table 8 and containing 1.5 to 2.0 μg/l of Selenium content and variable Selenite content between 97 and 11% of Selenium content, the remaining % being Selenate. RW3 is treated through a first filter filled with E33. The water is processed at a contact time of 12 minutes. The composition of treated water after 225 BV is also reported in Table 8, indicating that the content of essential constituents is not altered.

Table 8: Composition of RW3 and treated water

| Water | $Ca^{2+}$ | $Mg^{2+}$ | $Na^+$ | $K^+$ | $HCO_3^-$ | $Cl^-$ | $SO_4^{2-}$ | $NO_3^-$ |
|---|---|---|---|---|---|---|---|---|
| RW3 | 8.0 | 2.3 | 26.0 | 6.1 | 84.2 | 14.0 | 7.5 | 6.8 |
| Treated water | 8.0 | 2.3 | 26.0 | 6.1 | 78.7 | 14.0 | 8.0 | 6.8 |

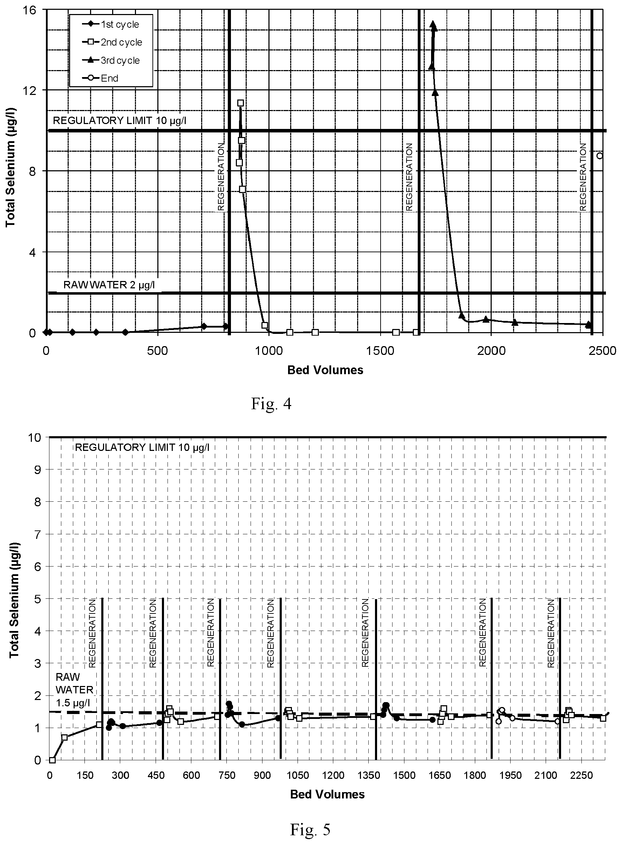

The process is run with an adsorption cycle of 7 days and a weekly regeneration of 2 hours. Figure 4 shows the evolution of Selenium in treated water during 3 weeks. Only Selenate is measured at the outlet of the filter, but after regeneration, the released concentration is very high during 100 BV, sometime exceeding the regulatory limit of 10 μg/l. This is due to the fact that too much Selenite is accumulated in the filter during the production cycle. The regeneration frequency must be increased.

The same water RW3 with the same Selenium content and variable proportions of Selenite / Selenate is treated through a second filter identical to the first and filled with the same E33 filter material. The contact time is reduced to 6 minutes and process is run with an adsorption cycle of 1 day, followed by a daily regeneration of 1 hour. Figure 5 shows the evolution of Selenium content in treated water. Only Selenate is measured at the outlet of the filter. After regeneration, the released concentration is higher than inlet concentration during 50 BV, but contrary to the first filter, the maximum outlet concentration is not higher than 150% of the concentration in raw water.

Example 6

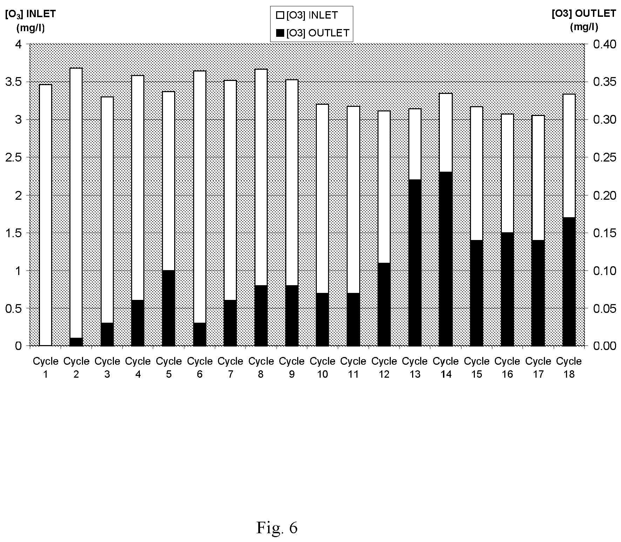

Ozone concentration at the inlet and the outlet of the second filter used in Example 5 is followed during the daily 1 hour regeneration cycles. Figure 6 illustrates the concentrations measured at the end of each regeneration cycle. During the first regeneration cycle, no ozone is detected at the outlet of the filter, then the outlet concentration grows progressively until reaching about 0.15 ppm after 15 cycles. The media is progressively activated by contact with ozone. It will be obvious for those skilled in the art that the number of activation cycles will depend on the duration of exposure to ozone and on the inlet ozone concentration, i.e. the ozone flux.

Example 7

Treated water at the outlet of the second filter of example 5 is bottled into 0.5 L PET bottles and stored at ambient temperature. At time of bottling, similar bottles are filled in parallel with raw water and stored in the same conditions. For each sample, one bottle is opened after 1 month ½ and one bottle after 2 month ½ in order to control the presence of bad odours by a smell test. The results are reported in Table 9. After 1 month ½ of storage no odour is detected, but after 2 month ½, samples bottled April the 7th and April the 9th developed the characteristic odours related to the presence of methylated Selenium compounds. However, only the raw water developed the odours, not the treated water, proving that the process succeeded in avoiding the generation of odours.

Table 9 : recording of smell tests (0 = nothing detected)

| Bottling date | IN / OUT | Detection of odours associated to volatile methylated Selenium molecules | |
|---|---|---|---|
| | | After 1 month 1/2 | After 2 month 1/2 |
| March 19 | IN | 0 | 0 |
| | OUT | 0 | 0 |
| March 22 | IN | 0 | 0 |
| | OUT | 0 | 0 |
| March 25 | IN | 0 | 0 |
| | OUT | 0 | 0 |
| April 02 | IN | 0 | 0 |
| | OUT | 0 | 0 |

(continued)

|  | | Detection of odours associated to volatile methylated Selenium molecules | |
| Bottling date | IN / OUT | After 1 month 1/2 | After 2 month 1/2 |
| --- | --- | --- | --- |
| April 07 | IN | 0 | Hydrocarbon |
| April 07 | OUT | 0 | 0 |
| April 09 | IN | 0 | Swampy |
| April 09 | OUT | 0 | 0 |
| April 12 | IN | 0 | 0 |
| April 12 | OUT | 0 | 0 |

**Claims**

1. A process for treating a raw water containing Selenium in a lower than 10 $\mu$g/l content, the Selenium being partly in the form of Selenite, comprising the following successive steps:

   a. a first production step in which raw water is filtered through a filter material containing iron oxide hydroxide and/or titanium oxide in order to selectively remove almost all the Selenite from said raw water;
   b. a regeneration step in which ozonated water is passed through the filter in order to oxidize into Selenate the Selenite retained by said filter material during the first production step;
   c. optionally a rinsing step in order to flush ozonation by-products out of the filter;
   d. a second production step in which raw water is filtered through the regenerated filter material obtained in step b) or c) in order to selectively remove almost all the Selenite from said raw water and to release Selenate from the filter material in said raw water, wherein said release is continuous during the whole second production step and wherein the Selenium content obtained in the treated water does not exceed 10 $\mu$g/l.

2. The process according to claim 1 wherein the Selenium content obtained in the treated water does not exceed 150% of the Selenium content in raw water, more preferably does not exceed 130%, even more preferably does not exceed 110%.

3. Process according to any of claim 1 or 2 wherein steps b) to d) are repeated at least once.

4. Process according to any of claim 1 to 3, wherein the filter material is iron oxide hydroxide.

5. Process according to any of claims 1 to 4, wherein the regeneration step b) is carried out in loop.

6. Process according to any of claims 1 to 5, wherein the regeneration step b) is carried out in a co-current mode.

7. Process according to any of claims 1 to 6, wherein the regeneration step b) lasts no more than 2 hours, more preferably no more than 1 hour.

8. Process according to any of claim 1 to 7, wherein the regeneration step b) is carried out concomitantly with a sanitation step in which the filter material is sterilized by the ozonated water passing through the filter, at an ozone concentration of at least 1 mg/l, more preferably of at least 2 mg/l.

9. Process according to claim 8, wherein the concentration of ozone of the ozonated water is measured at the outlet of the filter material during the sanitation step , preferably the concentration is in the range of 0.05 mg/l to 0.50 mg/l of ozonated water, more preferably in the range of 0.10 mg/l to 0.25 mg/l.

10. Process according to any of the claims 8 or 9, wherein the CT value (ozone concentration "C" in the ozonated water multiplied by the contact time "T" of ozonated water with the filter material) measured at the outlet of the filter during the sanitation step is comprised in the range of 1 to 50 mg.l$^{-1}$.min, more preferably in the range of 1 to 10 mg.l$^{-1}$.min.

11. Process according to any of claims 1 to 10 wherein the regeneration step b) is carried out at a frequency of between one per day to one per month, more preferably between one per day to one per week to achieve almost constant release of Selenate into the treated water.

12. Process according to any of the claims 1 to 11, wherein the filter material is packed into a column

13. Process according to any of the claims 1 to 12, wherein in the production steps a) and d) the raw water is filtered at a flow speed of 1 to 20 m/h, more preferably 3 to 15 m/h, even more preferably 5 to 10 m/h, and with a contact time of water with the filter material in the range of 1 to 30 minutes, more preferably 2 to 20 minutes.

14. Process according to any of the claims 1 to 13 wherein the treated water content in essential constituents Calcium ($Ca^{2+}$), Magnesium ($Mg^{2+}$), Sodium ($Na^+$), Potassium ($K^+$), Bicarbonate ($HCO_3^-$), Chloride ($Cl^-$), Sulfate ($SO_4^{2-}$) and Nitrate ($NO_3^-$) is equal to the raw water content $\pm$ 10%.


**Patentansprüche**

1. Prozess zum Behandeln von Rohwasser, das Selen mit einem Gehalt von weniger als 10 μg/l enthält, wobei das Selen teilweise in Form von Selenit ist, welcher die nachfolgenden Schritte umfasst:

    a. einen ersten Produktionsschritt, bei dem Rohwasser durch ein Filtermaterial gefiltert wird, das Eisenoxidhydroxid und/oder Titanoxid enthält, um fast das gesamte Selenit aus dem Rohwasser selektiv zu entfernen;
    b. einen Regenerationsschritt, bei dem ozonisiertes Wasser durch das Filter geschickt wird, um das Selenit, das durch das Filtermaterial während des ersten Produktionsschritts zurückgehalten wurde, zu oxidieren;
    c. optional einen Spülschritt, um Ozonisierungsnebenprodukte aus dem Filter herauszuspülen;
    d. einen zweiten Produktionsschritt, bei dem Rohwasser durch das regenerierte Filtermaterial gefiltert wird, das in Schritt b) oder c) erhalten wurde, um selektiv fast das gesamte Selenit aus dem Rohwasser zu entfernen und Selenat aus dem Filtermaterial in das Rohwasser freizusetzen, wobei das Freisetzen fortlaufend während des ganzen zweiten Produktionsschritts erfolgt und wobei der Selengehalt, der im behandelten Wasser erhalten wird, 10 μg/l nicht übersteigt.

2. Prozess nach Anspruch 1, wobei der Selengehalt, der im behandelten Wasser erhalten wird, 150 % des Selengehalts in Rohwasser nicht übersteigt, besser 130 % nicht übersteigt, am besten 110 % nicht übersteigt.

3. Prozess nach einem der Ansprüche 1 oder 2, wobei die Schritte b) bis d) mindestens einmal wiederholt werden.

4. Prozess nach einem der Ansprüche 1 bis 3, wobei das Filtermaterial Eisenoxidhydroxid ist.

5. Prozess nach einem der Ansprüche 1 bis 4, wobei der Regenerationsschritt b) in einer Schleife ausgeführt wird.

6. Prozess nach einem der Ansprüche 1 bis 5, wobei der Regenerationsschritt b) in einem Gleichstrommodus ausgeführt wird.

7. Prozess nach einem der Ansprüche 1 bis 6, wobei der Regenerationsschritt b) nicht länger als 2 Stunden, vorzugsweise nicht länger als 1 Stunde dauert.

8. Prozess nach einem der Ansprüche 1 bis 7, wobei der Regenerationsschritt b) gleichzeitig mit einem Sanierungsschritt ausgeführt wird, bei dem das Filtermaterial durch das ozonisierte Wasser sterilisiert wird, das durch das Filter läuft, bei einer Ozonkonzentration von mindestens 1 mg/l, vorzugsweise von mindestens 2 mg/l.

9. Prozess nach Anspruch 8, wobei die Konzentration von Ozon des ozonisierten Wassers am Auslass des Filtermaterials während des Sanierungsschritts gemessen wird, vorzugsweise ist die Konzentration im Bereich von 0,05 mg/l bis 0,50 mg/l des ozonisierten Wassers, besser im Bereich von 0,10 mg/l bis 0,25 mg/l.

10. Prozess nach einem der Ansprüche 8 oder 9, wobei der CT-Wert (Ozonkonzentration "C" im ozonisierten Wasser, multipliziert mit der Kontaktzeit "T" des ozonisierten Wassers mit dem Filtermaterial), gemessen am Auslass des Filters während des Sanierungsschritts, im Bereich von 1 bis 50 mg.l$^{-1}$.min, vorzugsweise im Bereich von 1 bis 10 mg.l$^{-1}$.min liegt.

**11.** Prozess nach einem der Ansprüche 1 bis 10, wobei der Regenerationsschritt b) mit einer Frequenz von einmal pro Tag bis einmal pro Monat, vorzugsweise von einmal pro Tag bis einmal pro Woche ausgeführt wird, um eine fast konstante Freisetzung von Selenat in das behandelte Wasser zu erreichen.

**12.** Prozess nach einem der Ansprüche 1 bis 11, wobei das Filtermaterial zu einer Säule gepackt ist.

**13.** Prozess nach einem der Ansprüche 1 bis 12, wobei bei den Produktionsschritten a) und d) das Rohwasser mit einer Strömungsgeschwindigkeit von 1 bis 20 m/h, vorzugsweise 3 bis 15 m/h, besser 5 bis 10 m/h gefiltert wird und mit einer Kontaktzeit von Wasser mit dem Filtermaterial im Bereich von 1 bis 30 Minuten, vorzugsweise 2 bis 20 Minuten.

**14.** Prozess nach einem der Ansprüche 1 bis 13, wobei der Gehalt des behandelten Wassers an wesentlichen Bestand-teilen Calcium ($Ca^{2+}$), Magnesium ($Mg^{2+}$), Natrium ($Na^+$), Kalium ($K^+$), Bikarbonat ($HCO_3^-$), Chlorid ($Cl^-$), Sulfat ($SO_4^{2-}$) und Nitrat ($NO_3^-$) gleich dem Gehalt des Rohwassers $\pm$ 10 % ist.

## Revendications

**1.** Procédé de traitement d'une eau brute contenant du sélénium en une teneur inférieure à 10 $\mu$g/l, le sélénium étant en partie sous la forme de sélénite, comprenant les étapes successives suivantes :

a. une première étape de production dans laquelle l'eau brute est filtrée à travers un matériau filtrant contenant de l'oxyhydroxyde de fer et/ou de l'oxyde de titane pour éliminer sélectivement pratiquement toute la sélénite de ladite eau brute ;
b. une étape de régénération dans laquelle l'eau ozonée est passée à travers le filtre pour oxyder en sélénate la sélénite retenue par ledit matériau filtrant lors de la première étape de production ;
c. éventuellement une étape de rinçage pour éliminer les sous-produits d'ozonation du filtre ;
d. une seconde étape de production dans laquelle l'eau brute est filtrée à travers le matériau filtrant régénéré obtenu à l'étape b) ou c) pour éliminer sélectivement pratiquement toute la sélénite de ladite eau brute et libérer le sélénate du matériau filtrant dans ladite eau brute, dans laquelle ladite libération est continue pendant toute la seconde étape de production et dans laquelle la teneur en sélénium obtenue dans l'eau traitée n'excède pas 10 $\mu$g/l.

**2.** Procédé selon la revendication 1 dans lequel la teneur en sélénium obtenue dans l'eau traitée n'excède pas 150 % de la teneur en sélénium contenu dans l'eau brute, plus préférablement n'excède pas 130 %, plus préférablement encore n'excède pas 110 %.

**3.** Procédé selon l'une quelconque des revendications 1 ou 2 dans lequel les étapes b) à d) sont répétées au moins une fois.

**4.** Procédé selon l'une quelconque des revendications 1 à 3, dans lequel le matériau filtrant est l'oxyhydroxyde de fer.

**5.** Procédé selon l'une quelconque des revendications 1 à 4, dans lequel l'étape de régénération b) est effectuée en boucle.

**6.** Procédé selon l'une quelconque des revendications 1 à 5, dans lequel l'étape de régénération b) est effectuée en mode co-courant.

**7.** Procédé selon l'une quelconque des revendications 1 à 6, dans lequel l'étape de régénération b) ne dure pas plus de 2 heures, plus préférablement pas plus d'1 heure.

**8.** Procédé selon l'une quelconque des revendications 1 à 7, dans lequel l'étape de régénération b) est effectuée concomitamment à une étape d'assainissement dans laquelle le matériau filtrant est stérilisé par le passage de l'eau ozonée à travers le filtre, à une concentration d'ozone d'au moins 1 mg/l, plus préférablement d'au moins 2 mg/l.

**9.** Procédé selon la revendication 8, dans lequel la concentration d'ozone de l'eau ozonée est mesurée à la sortie du matériau filtrant pendant l'étape de désinfection, de préférence la concentration est dans la plage de 0,05 mg/l à 0,50 mg/l d'eau ozonée, plus préférablement dans la plage de 0,10 mg/l à 0,25 mg/l.

**10.** Procédé selon l'une quelconque des revendications 8 ou 9, dans lequel la valeur CT (concentration d'ozone « C » dans l'eau ozonée multipliée par le temps de contact « T » de l'eau ozonée avec le matériau filtrant) mesurée à la sortie du filtre pendant l'étape d'assainissement est dans la plage de 1 à 50 mg.$l^{-1}$.min, plus préférablement dans la plage de 1 à 10 mg.$l^{-1}$.min.

**11.** Procédé selon l'une quelconque des revendications 1 à 10 dans lequel l'étape de régénération b) est effectuée à une fréquence comprise entre une fois par jour à une fois par mois, plus préférablement entre une fois par jour à une fois par semaine pour obtenir une libération pratiquement constante du sélénate dans l'eau traitée.

**12.** Procédé selon l'une quelconque des revendications 1 à 11, dans lequel le matériau filtrant est disposé dans une colonne.

**13.** Procédé selon l'une quelconque des revendications 1 à 12 dans lequel, dans les étapes de production a) et d), l'eau brute est filtrée à un débit de 1 à 20 m/h, plus préférablement de 3 à 15 m/h, plus préférablement encore de 5 à 10 m/h, et avec un temps de contact de l'eau avec le matériau filtrant dans la plage de 1 à 30 minutes, plus préférablement de 2 à 20 minutes.

**14.** Procédé selon l'une quelconque des revendications 1 à 13 dans lequel la teneur de l'eau traitée en constituants essentiels de calcium ($Ca^{2+}$), magnésium ($Mg^{2+}$), sodium ($Na^+$), potassium ($K^+$), bicarbonate ($HCO_3^-$), chlorure ($Cl^-$), sulfate ($SO_4^{2-}$) et nitrate ($NO_3^-$) est égale à la teneur de l'eau brute $\pm$ 10 %.

Fig. 1

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 8700161 A
- US 20070210006 A, Rayalu
- EP 1582505 A
- EP 2141126 A
- WO 2006116421 A
- EP 1476401 A

### Non-patent literature cited in the description

- **RANJARD L. ; PRIGENT-COMBARET C. ; NAZARET S. ; COURNOYER B.** Methylation of Inorganic and Organic Selenium by the Bacterial Thiopurine Methyltransferase. *Journal of Bacteriology,* 2002, vol. 184 (11), 3146-3149
- **THOMPSON-EAGLE ET. ; FRANKENBERGER WT. ; KARLSON U.** Volatilization of Selenium by Alternaria alternata. *Applied and Environmental Microbiology,* 1989, vol. 55 (6), 1406-1413
- **TWIDWELL et al.** Technologies and Potential Technologies for Removing Selenium from Process and Mine Wastewaters, Proceedings Minor Elements 2000. SME, 2000, 53-66
- **BLONDEAU S. ; PEROT J. ; NAULEAU F.** *Journées Information Eaux, 2008 Poitiers,* 23 September 2008
- **PEAK D.** Adsorption mechanisms of selenium oxyanions at the aluminium oxide/water interface. *Journal of Colloid And Interface Science,* 2006, vol. 303, 337-345
- **BARRON E. ; MIGEOT V. ; RABOUAN S. ; POTIN-GAUTIER M. ; SÉBY F. ; HARTEMANN P. ; LÉVI Y. ; LEGUBE B.** The case for re-evaluating the upper limit value for selenium in drinking water in Europe. *Journal of Water and Health. 07.4,* 2009, 630-641
- **BUENO M ; POTIN-GAUTIER M.** *Journal of Chromatography A,* 2002, vol. 963 (1-2), 185-193
- **HYMER et al.** *J. Chromatogr. A,* 2006, vol. 1114, 1-20
- **BUENO M. ; POTIN-GAUTIER M.** *Journal of Chromatography A,* 2002, vol. 963 (1-2), 185-193
- **LIU et al.** *Geostandard and Geoanalytical Research,* vol. 35 (1), 69-74